(19) Europäisches Patentamt / European Patent Office / Office européen des brevets

(11) **EP 2 071 310 B1**

(12) **FASCICULE DE BREVET EUROPEEN**

(45) Date de publication et mention
de la délivrance du brevet:
**01.08.2018 Bulletin 2018/31**

(51) Int Cl.:
***G01J 5/24*** *(2006.01)*

(21) Numéro de dépôt: **08305912.1**

(22) Date de dépôt: **11.12.2008**

(54) **Dispositif pour la détection d'un rayonnement électromagnétique comportant un bolomètre résistif d'imagerie, système comprenant une matrice de tels dispositifs et procédé de lecture d'un bolomètre d'imagerie d'un tel système**

Vorrichtung zur Erkennung von elektromagnetischer Strahlung, die ein bildgebendes Widerstandsbolometer umfasst, System, das eine Matrix solcher Vorrichtungen umfasst und Verfahren zum Auslesen eines solchen Systems

Device for detecting electromagnetic radiation comprising an imaging resistive bolometer, system comprising an array of such devices and method of reading an imaging bolometer of such a system

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.12.2007 FR 0759789**

(43) Date de publication de la demande:
**17.06.2009 Bulletin 2009/25**

(73) Titulaire: **ULIS**
**38113 Veurey Voroize (FR)**

(72) Inventeurs:
• **Dupont, Benoît**
  **1180 Bruxelles (BE)**
• **Vilain, Michel**
  **38450 Saint-Georges de Commiers (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A- 1 211 888        WO-A1-98/35212**
**WO-A1-2005/073684    WO-A2-01/84118**
**US-A1- 2003 160 171    US-A1- 2006 231 760**

• **J. L. TISSOT ET AL: "Uncooled amorphous silicon IRFPAs with 25 microns pixel-pitch" ELECTRO-OPTICAL AND INFRARED SYSTEMS : TECHNOLOGY AND APPLICATIONS IIIPROC. OF SPIE, vol. 6395, 2006, pages 63950C-1-63950C-7, XP002482938**

**Description**

## DOMAINE DE L'INVENTION

La présente invention a trait au domaine de la détection de rayonnements électromagnétiques, et plus particulièrement infrarouge, à base de dispositifs microbolométriques.

Plus particulièrement, l'invention concerne un dispositif pour la détection d'un rayonnement électromagnétique comportant un bolomètre résistif d'imagerie sensible au rayonnement, destiné à être connecté électriquement à un circuit de formation de signal, et un bolomètre résistif de réjection de mode commun associé électriquement au bolomètre d'imagerie de manière à ce que le courant traversant le bolomètre de réjection de mode commun soit retranché du courant traversant le bolomètre d'imagerie.

## ETAT ANTERIEUR DE LA TECHNIQUE

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés "détecteurs quantiques" qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur,
- des moyens d'isolation thermique du détecteur, de telle sorte à permettre à celui-ci de s'échauffer sous l'action du rayonnement infrarouge,
- des moyens de thermométrie qui, dans le cadre d'un détecteur bolométrique, mettent en oeuvre un élément résistif,
- et des moyens de lecture des signaux électriques fournis par les moyens de thermométrie.

Les détecteurs destinés à l'imagerie infrarouge sont classiquement réalisés sous la forme d'une matrice de détecteurs élémentaires selon une ou deux dimensions, ladite matrice étant formée de manière dite "monolithique" ou reportée sur un substrat généralement réalisé en silicium, dans lequel sont constitués des moyens d'adressage séquentiel des détecteurs élémentaires, et des moyens d'excitation électrique et de pré-traitement des signaux électriques générés par ces détecteurs élémentaires. Ce substrat et les moyens intégrés sont communément désignés par le terme de « circuit de lecture ».

Pour obtenir une scène par l'intermédiaire de ce détecteur, on projette la scène à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

La difficulté essentielle de mise en oeuvre des détecteurs bolométriques réside dans la très faible variation relative de leur résistance électrique, représentative des variations locales de température d'une scène observée, par rapport à la valeur moyenne de ces résistances.

En effet, les lois physiques d'émission thermique dans l'infrarouge de la scène observée entre 8 et 14 $\mu$m (correspondant à la bande de transparence de l'atmosphère terrestre dans laquelle sont habituellement utilisés des détecteurs bolométriques) conduisent à une puissance différentielle dP au niveau du plan focal détecteur de l'ordre de 50 $\mu$W/cm$^2$ lorsque la température de scène varie de 1K autour de 300 K. La détermination de cette valeur est aisément à la portée de l'homme du métier, en appliquant les lois physiques précitées.

Cette estimation est valable pour une optique ouverte à f/1, une transmission élevée entre la scène et le détecteur, et lorsque le détecteur ne reçoit qu'une quantité négligeable d'énergie en dehors de la bande de longueur d'onde spécifiée, par exemple et typiquement si le boîtier est muni d'une fenêtre transparente dans cet intervalle et opaque en deçà et au-delà des limites indiquées.

Corollairement, la variation de température dT d'un bolomètre à l'équilibre thermique, liée à une puissance infrarouge dP absorbée sur sa surface S est donnée par l'expression suivante :

$$dT = Rth \cdot dP,$$

où Rth est une résistance thermique entre la partie sensible du bolomètre, qui s'échauffe sous l'effet du rayonnement infrarouge, et le substrat isotherme qui le porte.

Ainsi, pour un bolomètre de dimensions typiques de l'ordre de 30 $\mu$m x 30 $\mu$m, ce qui représente une surface de 9.10$^{-6}$ cm$^2$, la résistance thermique typique selon l'état de la technique, est de l'ordre de 20 à 60 MK/W, ce qui conduit à un échauffement du bolomètre de l'ordre de 0,01 K à 0,03 K lorsque la température de l'élément de scène vu par ce bolomètre varie de 1 K.

Si $R_b$ désigne la résistance électrique vue entre les deux pôles d'amenée du courant au niveau du matériau sensible bolométrique, la variation de résistance $dR_b$ qui en résulte est exprimée par l'expression suivante :

$$dR_b = TCR \cdot dT$$

où TCR est un coefficient de variation relatif de résistance du matériau constituant la partie sensible du bolomètre au voisinage de la température de fonctionnement, classiquement voisin de -2 % par K pour les matériaux usuels dans ce domaine (oxydes de vanadium, silicium amorphe). En conséquence, la variation relative de résistance dR/R consécutive à un différentiel de 1 K sur la scène est de l'ordre de 0,02 à 0,06 %, soit $2.10^{-4}$ à $6.10^{-4}$/K.

Or, il est demandé aujourd'hui des résolutions thermiques d'imagerie nettement meilleures que 1 K et typiquement 0,05 K, voire moins. De tels résultats peuvent être obtenus par l'élaboration de structures présentant des résistances thermiques Rth très élevées de par la mise en oeuvre de techniques sophistiquées. Cependant le besoin demeure de mesurer d'infimes variations relatives de résistance et typiquement, ainsi qu'indiqué précédemment, de l'ordre de quelques $10^{-6}$, pour résoudre des variations temporelles et spatiales de température de quelques dizaines de milliKelvin.

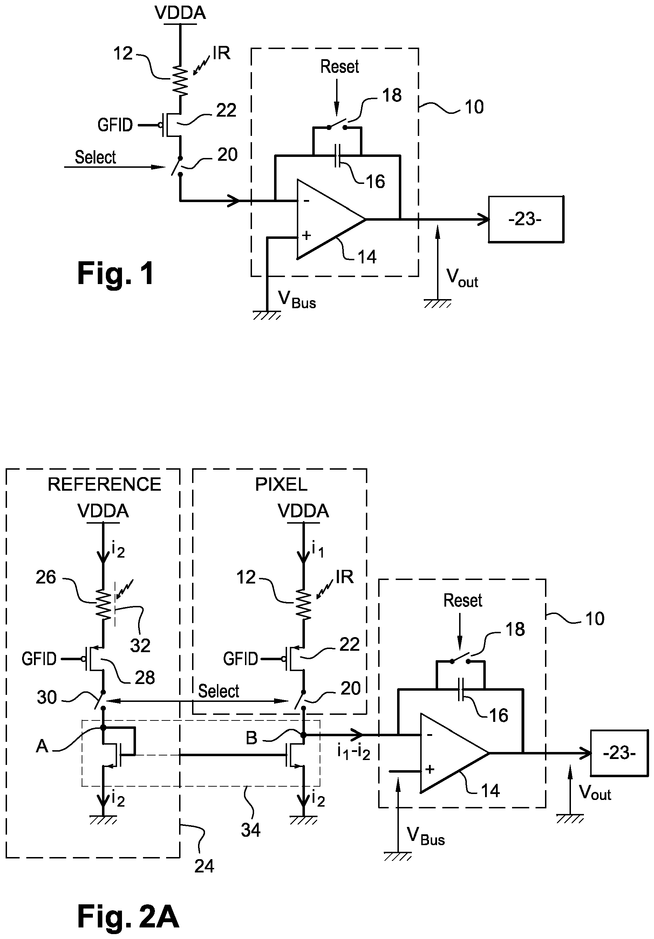

Afin d'expliciter la difficulté d'exploiter une aussi faible variation, on a schématisé en relation avec la figure 1, un circuit de lecture d'un bolomètre résistif **12** de résistance $R_b$, soumis à un rayonnement infrarouge et connecté à l'une de ses bornes à une tension de polarisation constante $V_{DDA}$ prédéterminée. Le circuit de lecture comprend un intégrateur **10** formé de :

- un amplificateur opérationnel **14** dont l'entrée non inverseuse (+) est mise à une tension constante *Vbus* prédéterminée ;
- un condensateur **16**, de capacité $C_{int}$ prédéterminée, connecté entre l'entrée inverseuse (-) de l'amplificateur **14** et la sortie de celui-ci ;
- un interrupteur de remise à zéro **18** connecté en parallèle du condensateur **16** et pilotable au moyen d'un signal Reset.

Le circuit de lecture comprend en outre :

- un premier interrupteur **20** de lecture, pilotable au moyen d'un signal « Select » et connecté à l'entrée inverseuse (-) de l'amplificateur opérationnel ;
- un transistor MOS **22** d'injection, dont la grille est mise à une tension GFID constante prédéterminée, dont la source est connectée à l'autre borne du bolomètre **12**, et dont le drain est connecté à l'autre borne du premier interrupteur **20** de sélection ; et
- une unité **23** de traitement d'information, connectée en sortie de l'amplificateur opérationnel **14**, et déterminant en fonction de la tension $V_{out}$ en sortie de celui-ci la variation de la résistance du bolomètre **12** induite par le rayonnement infrarouge reçu par ce dernier, et donc ce rayonnement infrarouge.

Au début d'un cycle de lecture du bolomètre **12**, l'interrupteur de remise à zéro **18**, qui est à l'état fermé suite à un cycle de décharge du condensateur **16**, est basculé à l'état ouvert par réglage du signal Reset à une valeur appropriée. Le premier interrupteur **20** de lecture, qui est dans l'état ouvert, est basculé à l'état fermé par réglage du signal « Select ». Le courant traversant le bolomètre **12** est alors intégré par le condensateur **16**. Lorsqu'une durée d'intégration $\Delta T_{int}$ prédéterminée s'est écoulée depuis le début du cycle de lecture, le premier interrupteur de lecture **20** est basculé dans son état ouvert. La tension $V_{out}$ en sortie de cet intégrateur, image de la résistance $R_b$ du bolomètre, est alors donnée par l'expression :

$$V_{out} = \frac{V_{bolo}}{R_b} \times \frac{\Delta T_{int}}{C_{int}}$$

où $V_{bolo}$ est la tension aux bornes du bolomètre **12**, en admettant, pour simplifier, que $R_b$ varie peu pendant la durée d'intégration Tint.

Ainsi, une matrice de N résistances (bolomètres) pourrait être lue selon ce principe à l'aide de l'intégration simultanée (au moyen de N intégrateurs) ou séquentielle (sur un intégrateur disposé en bout de ligne ou en bout de colonne, voire un seul intégrateur pour la matrice).

Lorsque la matrice ainsi réalisée est éclairée par la projection d'une scène infrarouge, $V_{out}$ va présenter des variations spatiales (issues de chaque bolomètre) représentatives de la scène. Il est rappelé que la tension $V_{out}$ telle qu'exprimée précédemment est constituée pour une très grande part, d'une partie constante d'un détecteur à l'autre (signal dit « de mode commun »), qui ne présente donc aucun intérêt en termes d'imagerie. Seules les infimes variations de $V_{out}$ liées aux différences locales (entre un bolomètre et un autre) et temporelles (la scène varie au cours du temps) de puissance optique reçue constituent le signal utile de la scène observée.

Or, les contraintes inhérentes aux circuits microélectroniques en termes de tension (quelques volts), les valeurs accessibles et maîtrisables des résistances bolométriques $R_b$ (quelques dizaines à quelques centaines de kOhms) et la nécessité d'utiliser des durées d'intégration suffisamment courtes, conduiraient à mettre en oeuvre des capacités $C_{int}$ de très grandes valeurs, en tout cas incompatibles avec la surface disponible dans chaque point élémentaire ou pixel de détection (de l'ordre de celle d'un bolomètre), et même en pratique incompatibles avec un report de cette capacité à l'extérieur de la surface du circuit de lecture correspondant à la matrice sensible, où la surface est pourtant peu limitée. Il est donc nécessaire de mettre en place des modes de lecture qui limitent le courant à intégrer à des niveaux compatibles avec des capacités raisonnablement réalisables.

Par ailleurs, de par l'existence du couplage thermique entre le substrat et le bolomètre, les variations thermiques subies par le substrat se reportent sur le bolomètre. Comme les bolomètres usuels présentent une sensibilité très importante à de telles variations, ceci a pour conséquence que le signal utile de sortie est perturbé par cette composante de fond, ce qui nuit à la qualité de la détection du rayonnement infrarouge.

Pour pallier ces inconvénients, il a été proposé une première structure résistive destinée à supprimer le courant de mode commun, dite de « référence » décrite dans le document « Performance of 320x240 Uncooled Bolometer-type Infrared Focal Plane Arrays » de Yutaka Tanake et al., Proc. SPIE, vol 5074. D'autres documents pertinents sont les documents de brevets EP1211888, WO2005073684, WO9835212, US20060231760, WO0184118 ainsi que le document "Uncooled amorphous silicon IRFPAs with 25 $\mu$m pixel-pitch" de Tissot et al., Proc. SPIE, vol. 6395. Le principe d'une structure résistive de référence est d'associer au bolomètre résistif **12** de la figure 1, un second bolomètre résistif identique, polarisé et connecté au substrat de manière identique au premier bolomètre. Ce second bolomètre est en outre agencé de manière à être essentiellement insensible au flux en provenance de la scène, typiquement par une membrane métallique opaque. Les premier et second bolomètres résistifs sont par ailleurs associés de sorte que le courant traversant le second bolomètre est soustrait du courant traversant le premier bolomètre et que ce soit cette différence de courants qui soit utilisée par le circuit de lecture.

Afin de distinguer les fonctions de ces deux bolomètres, on utilisera l'expression bolomètre « d'imagerie » pour le premier bolomètre, et l'expression bolomètre « de référence » pour le second bolomètre, même si dans certaines applications, de thermométrie par exemple, on ne forme pas forcement une image, mais par exemple une mesure de température.

Une structure de référence **24** est schématiquement illustrée à la figure 2A, qui reprend les éléments de la figure 1, auxquels est associé un circuit dit « de référence » **24**. Le circuit de référence **24** comprend un bolomètre de référence **26**, un transistor MOS de polarisation **28** et un second interrupteur de lecture **30**, respectivement sensiblement identiques au bolomètre d'imagerie **12**, au transistor MOS d'injection **22** et au premier interrupteur de lecture **20**.

Les éléments **26**, **28** et **30** sont de plus polarisés et agencés de la même manière que les éléments **12**, **22** et **20**, à la seule différence que le bolomètre de référence **26** est pourvu d'une membrane métallique opaque **32** le protégeant du rayonnement issu de la scène.

La structure résistive de référence comporte enfin un miroir de courant **34**, dont une branche d'entrée est connectée à une borne A du second interrupteur de lecture **30**, et dont l'autre branche d'entrée est connectée à une borne B du premier interrupteur de lecture **20**. Ce miroir de courant **34** reproduit sensiblement le courant $i_2$ traversant le bolomètre de référence **26** au niveau de la borne B.

La mise en oeuvre de miroirs de courant permet de ne disposer qu'une seule structure de référence par ligne, l'ensemble de ces structures étant disposé selon une « colonne » de référence pour un détecteur matriciel. Les miroirs de courant sont des structures connues de l'homme du métier. Elles permettent de manière générale la copie d'un courant de référence dans une structure éloignée, et en particulier la distribution de ce courant de référence dans une multitude d'éléments de circuiterie, indépendamment de leur charge résistive.

Ainsi, le courant $i_2$ traversant le bolomètre de référence est sensiblement égal au courant de mode commun, et le bolomètre de référence est sujet aux mêmes variations thermiques en provenance du substrat que le bolomètre d'imagerie. La différence $i_1$-$i_2$ entre le courant $i_1$ traversant le bolomètre d'imagerie et le courant $i_2$ traversant le bolomètre de référence est alors sensiblement exempte des perturbations que sont le courant de mode commun et la composante liée aux variations thermiques du substrat. Cette différence de courant $i_1$-$i_2$ correspond donc sensiblement au courant induit par la variation de résistance du bolomètre d'imagerie **12** du fait de son échauffement par le rayonnement infrarouge issu de la scène.

Toutefois, une structure résistive de référence est techniquement difficile à produire. En effet, pour obtenir un fonctionnement satisfaisant de celle-ci, il est nécessaire que la membrane métallique **32** protégeant le bolomètre de référence soit totalement opaque au flux issu de la scène, tout en étant thermiquement isolée des autres éléments de la structure pour éviter toute perturbation thermique sur le bolomètre de référence. On conçoit aisément qu'une telle membrane soit difficile à concevoir et à produire.

Pour pallier les inconvénients précédemment mentionnés, il a également été proposé une seconde structure résistive destinée à supprimer le courant de mode commun, dite de « compensation » décrite dans le document « Uncooled amorphous silicon enhancement for 25$\mu$m pixel pitch achievement » E Mottin et al, Proc. SPIE, Technology and Application XXVIII, Vol 4820.

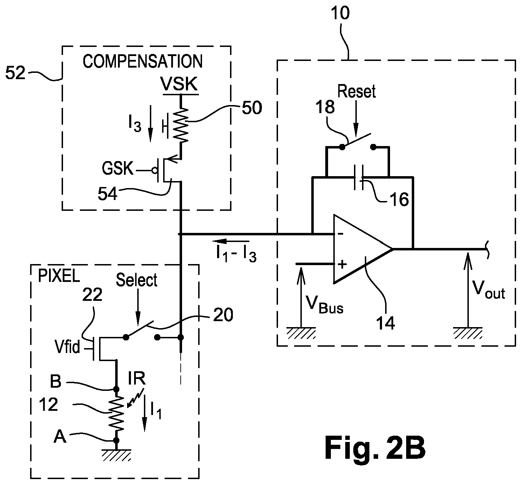

La figure 2B schématise cette structure de compensation **52**, qui comprend un bolomètre **50** construit typiquement à l'aide du même matériau que le bolomètre actif **12**, mais essentiellement insensible au rayonnement incident du fait d'une résistance thermique par construction très faible par rapport au substrat, et optionnellement muni en complément d'un écran optique, ainsi qu'un transistor **54** de polarisation du bolomètre **50**. Le bolomètre dit « thermalisé » **50** est connecté à une de ses bornes à une source de tension fixe *VSK,* et à l'autre borne à la source d'un transistor **54** dont la grille est portée à un potentiel fixe *GSK* et dont le drain est connecté à l'entrée inverseuse (-) de l'amplificateur **14**.

La valeur de la résistance **50** et des polarisations sont réglées de telle manière à produire un courant de mode commun $I_3$ de grandeur comparable au courant $I_1$, qui est retranché au courant $I_1$ au point de sommation de l'intégrateur **10**, lequel intègre donc le courant $I_1 - I_3$.

Cette structure est efficace en termes de réjection de mode commun si la résistance thermique du bolomètre **50** est très faible devant celle du bolomètre d'imagerie **12**, typiquement d'un facteur au moins de l'ordre de $10^3$, sinon il se forme des contrastes parasites préjudiciables à la qualité de l'image, non représentatifs de la scène, lorsqu'une zone très chaude de la scène forme une image sur ces structures. Ce résultat de haute conduction thermique peut être atteint par exemple en construisant les éléments bolométriques **50** directement au contact du substrat.

Cependant, une telle construction pose des problèmes ardus à maîtriser en termes de planéité des structures lors de l'assemblage technologique, et en pratique on est contraint de former les bolomètres **50** au même niveau que les membranes sensibles des bolomètres **12**. Il s'ensuit qu'il subsiste ordinairement une résistance thermique non nulle entre l'élément **50** et le substrat, sauf à prendre des dispositions technologiques complexes qui nuisent au rendement de fabrication et au coût des détecteurs ainsi élaborés.

Il est donc nécessaire dans le cas de mise en oeuvre d'une structure de référence, et au moins utile lors de la mise en ouvre d'une structure de compensation, de prévoir un écran opaque d'insensibilisation optique sur ces structures de réjection de mode commun, or la complexification sensible qu'implique l'élaboration d'une telle membrane entraîne nécessairement un surcoût, du fait d'étapes supplémentaires de fabrication et d'un rendement de production nécessairement inférieur.

**EXPOSE DE L'INVENTION**

Le but de la présente invention est de résoudre le problème susmentionné en proposant une structure ayant un bolomètre de réjection de mode commun qui soit isolé efficacement du rayonnement issu de la scène sans utiliser un écran physique de protection.

A cet effet, l'invention a pour objet un dispositif pour la détection d'un rayonnement électromagnétique selon la revendication 1 comportant un bolomètre résistif d'imagerie sensible au rayonnement, destiné à être connecté électriquement à un circuit de formation de signal, et un bolomètre résistif de réjection de mode commun associé électriquement au bolomètre d'imagerie de manière à ce que le courant traversant le bolomètre de réjection de mode commun soit retranché du courant traversant le bolomètre d'imagerie.

Selon l'invention, ce dispositif comporte des moyens de commande de la résistance du bolomètre de réjection de mode commun par injection de courant dans celui-ci. Ainsi, en utilisant des moyens de commande de la résistance du bolomètre de réjection de mode commun, il est possible de régler celle-ci à une valeur indépendante du rayonnement issu de la scène, et donc d'isoler par ce moyen électrique le bolomètre de réjection de mode commun de ce rayonnement.

Les moyens de commande de la résistance du bolomètre de réjection de mode commun comprennent des moyens d'injection d'un courant de référence prédéterminé dans celui-ci.

Les moyens de commande comprennent des moyens de déconnection des moyens d'injection de courant lorsqu'une tension à une borne du bolomètre de réjection de mode commun est sensiblement égale à une tension de référence prédéterminée.

Selon des modes de réalisation particuliers de l'invention, le dispositif comporte une ou plusieurs des caractéristiques suivantes.

La tension de référence est réglée à une valeur supérieure à la tension à la borne du bolomètre de réjection de mode commun lors d'une activation des moyens d'injection de courant.

Le bolomètre de réjection de mode commun est un bolomètre de référence, et le dispositif comprend un miroir de courant apte à être connecté électriquement sur une première branche à une borne du bolomètre d'imagerie, et sur une seconde branche à une borne du bolomètre de référence.

Le bolomètre de réjection de mode commun est un bolomètre de compensation.

Les moyens de commande sont aptes à fixer la résistance du bolomètre de réjection de mode commun sur une résistance de référence dépendante de la température du substrat au dessus duquel est formé le bolomètre d'imagerie.

Le bolomètre d'imagerie et le bolomètre de réjection de mode commun sont agencés dans un pont de Wheatstone.

L'invention a également pour objet un système de détection d'un rayonnement électromagnétique. Celui-ci comporte une matrice d'au moins une ligne de dispositifs comportant chacun un bolomètre résistif d'imagerie sensible au rayonnement et un bolomètre résistif de réjection de mode commun associé électriquement au bolomètre d'imagerie, de manière à ce que le courant traversant le bolomètre de réjection de mode commun soit retranché du courant traversant le bolomètre d'imagerie. Il comporte également un circuit de formation de signal apte à être connecté électriquement au bolomètre d'imagerie pour une lecture de la variation de résistance de celui-ci. Les dispositifs de détection de ce système sont du type susmentionné.

Selon des modes de réalisation particuliers de l'invention, le système comporte une ou plusieurs des caractéristiques suivantes.

Les moyens de commande de la résistance du bolomètre de réjection de mode commun sont aptes à régler sa résistance à une valeur indépendante de la scène.

Le circuit de formation de signal est apte à être initialisé avant une lecture du bolomètre d'imagerie, et les moyens de commande de la résistance du bolomètre de réjection de mode commun sont aptes à régler celle-ci pendant l'initialisation du circuit d'intégration.

L'invention a également pour objet un procédé de lecture d'une variation de la résistance d'un bolomètre résistif d'imagerie d'une matrice de bolomètres constitutive d'un système de détection d'un rayonnement électromagnétique selon la revendication 10. Ce procédé consiste :

- à faire circuler dans un bolomètre de réjection de mode commun un courant de mode commun de la matrice,
- à générer une différence de courant entre les courants circulant dans les bolomètres d'imagerie et les bolomètres de réjection de mode commun,
- à former le signal intégré relatif au bolomètre d'imagerie en fonction de la différence de courant.

Selon l'invention, préalablement à l'étape de circulation du courant de mode commun dans le bolomètre de réjection de mode commun, on procède au réglage de la résistance du bolomètre de réjection de mode commun à une valeur inférieure à celle de tous ces mêmes bolomètres lorsqu'ils sont exposés à une scène de température voisine de la limite haute d'une dynamique de scène prédéterminée.

**BREVE DESCRIPTION DES FIGURES**

L'invention sera mieux comprise à la lecture de la description qui va suivre, donnée uniquement à titre d'exemple, et réalisée en relation avec les dessins annexés, dans lesquels des références identiques identifient des éléments identiques ou analogues, et dans lesquels :

la figure 1 est une vue schématique d'un bolomètre sensible et de son dispositif de lecture selon l'état antérieur de la technique ;
la figure 2A est une vue schématique complétant la figure 1 avec compensation de mode commun à l'aide d'une structure résistive de référence selon l'état antérieur de la technique et des éléments de circuiterie associés ;
la figure 2B est une vue schématique complétant la figure 1 avec compensation de mode commun à l'aide d'une structure résistive de compensation selon l'état antérieur de la technique et des éléments de circuiterie associés ;
la figure 3A est une représentation schématique complétant la figure 2A avec compensation de mode commun à l'aide de la structure résistive de référence selon l'invention ;
la figure 3B est une représentation schématique complétant la figure 2B avec compensation de mode commun à l'aide de la structure résistive de compensation selon l'invention ;
la figure 4 est un organigramme d'un procédé de lecture d'un bolomètre d'imagerie à l'aide de la circuiterie schématisée sur les figures 3A et 3B ;
la figure 5A est une vue schématique d'un détecteur bolométrique selon l'invention mettant en oeuvre des structures de référence ;
La figure 5B est une vue schématique d'un détecteur bolométrique selon l'invention mettant en oeuvre des structures de compensation.

**DESCRIPTION DETAILLEE DE L'INVENTION**

Une structure résistive de référence selon l'invention est agencée dans un détecteur bolométrique qui comprend :

- une matrice d'imagerie unidimensionnelle ou bidimensionnelle de bolomètres d'imagerie agencée dans le plan focal d'une optique transparente aux infrarouges,
- un circuit de lecture formé dans un substrat sous la surface de la matrice et comprenant des moyens d'adressage ligne par ligne et d'intégration colonne par colonne de la matrice ;
- un ou plusieurs bolomètres de compensation de mode commun disposés dans chaque ligne ou alternativement, chaque colonne de la matrice d'imagerie mais au-delà de la zone sensible formant l'image pour les applications d'imagerie.

Un tel agencement de détecteurs bolométriques est classique et ne sera pas expliqué plus en détail par la suite. Pour de plus amples informations, on pourra se reporter par exemple, pour l'application des bolomètres de référence disposés en bout de ligne, au document « Performance of 320x240 Uncooled Bolometer-type Infrared Focal Plane Arrays » de Yutaka Tanake et al, Proc. SPIE, vol 5074, et pour l'application des bolomètres de compensation disposés en bout de colonne, au document « Uncooled amorphous silicon enhancement for $25\mu$m pixel pitch achievement » de E. Mottin et al, Proc. SPIE Technology and Application XXVIII, Vol 4820.

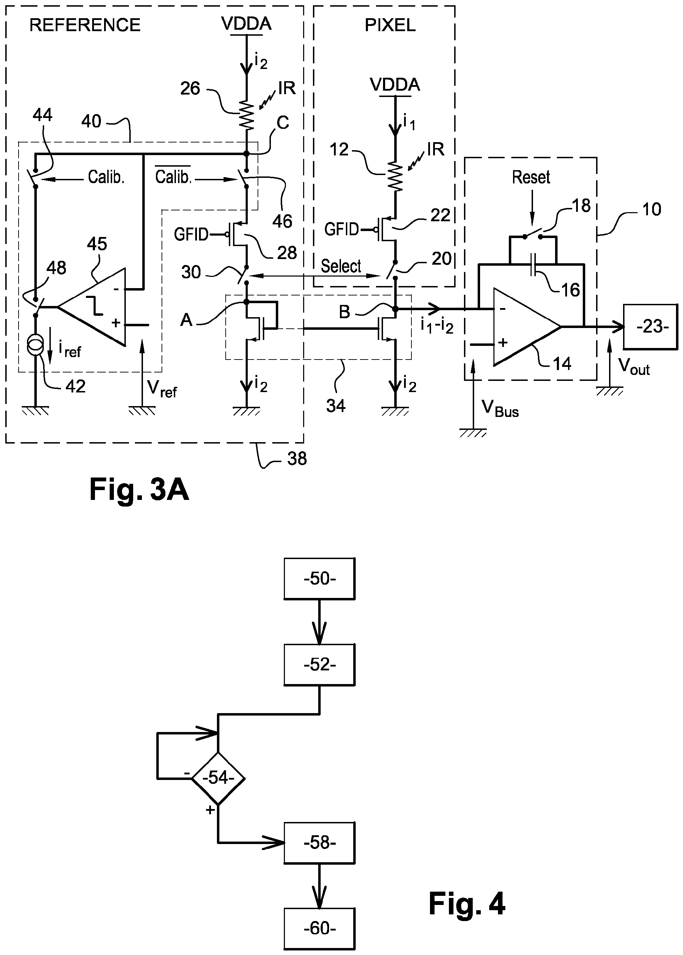

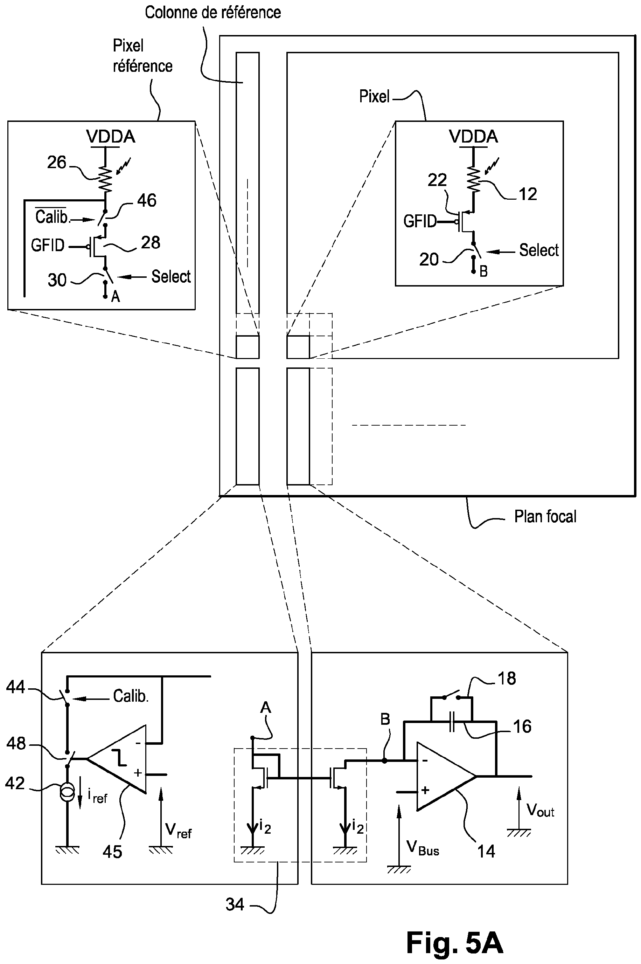

Il va maintenant être expliqué en relation avec les figures 3A et 5A, un premier agencement préféré d'un bolomètre d'imagerie, d'un circuit de lecture de celui-ci et d'un bolomètre de réjection de mode commun selon l'invention, de type dit « de référence ».

Comme illustré à la figure 3A, une structure de référence selon l'invention comprend une colonne de référence **38** dans laquelle, en lieu et place de la membrane métallique de protection, insensibilisant le bolomètre de référence contre les rayonnements de l'état de la technique illustré à la figure 2A, il est prévu un circuit **40** de commande de la résistance du bolomètre de référence **26**.

On notera donc que le bolomètre de référence **26** peut être soumis au rayonnement infrarouge issu de la scène au même titre que le bolomètre d'imagerie **12**.

Le circuit **40** de commande comprend une source de courant constant **42**, connectée à une borne C du bolomètre de référence **26** au travers d'un premier interrupteur de calibration **44** pilotable par un signal Calib. La source de courant **42** injecte dans le bolomètre de référence **26** un courant d'intensité prédéterminée $I_{ref}$ lorsque le premier interrupteur de calibration **44** est dans son état fermé.

Le circuit **40** de commande comprend également un second interrupteur de calibration **46**, pilotable au moyen d'un signal $\overline{Calib}$, qui est un signal complémentaire du signal Calib. Ce second interrupteur de calibration est agencé entre une borne C du bolomètre et la source du transistor MOS **28**.

Le circuit **40** comprend en outre un comparateur **45**, qui compare une tension $V_C$ de la borne C du bolomètre de référence **26** à une tension de référence prédéterminée $V_{ref}$.

Enfin, un troisième interrupteur **48**, piloté par un signal de sortie du comparateur **45**, est agencé entre la source de courant **42** et le bolomètre de référence **26**. Plus particulièrement, le comparateur **45** maintient le troisième interrupteur **48** dans son état fermé lorsque la tension $V_{ref}$ est supérieure à la tension $V_C$ à la borne C, et bascule le troisième interrupteur **48** dans son état ouvert lorsque la tension $V_{ref}$ est sensiblement égale à la tension $V_C$.

Un détecteur bolométrique comportant une matrice d'imagerie, lue par un circuit de lecture à réjection de courant de mode commun à partir de structures de référence comportant les éléments venant d'être décrits est illustré à la figure 5A.

Un procédé de lecture du bolomètre sensible **12** mis en oeuvre par le circuit de commande **40** va maintenant être décrit en relation avec la figure 4.

Une première étape de ce procédé est une étape d'initialisation **50**. L'étape **50** consiste notamment à sélectionner une valeur pour le courant $I_{ref}$ et une valeur pour la tension $V_{ref}$, d'une manière qui sera expliquée plus en détail par la suite.

Une étape **52** de préchauffage du bolomètre de référence **26** sous courant constant $I_{ref}$ et d'initialisation de l'intégrateur **10** est ensuite déclenchée par la fermeture de l'interrupteur de « Reset » **18**. Le terme de « préchauffage » est ici utilisé pour signifier qu'un cycle additionnel par rapport au fonctionnement de l'état de la technique est mis en oeuvre avant un cycle de lecture classique du bolomètre d'imagerie **12**. Ce cycle additionnel consiste à élever la température du bolomètre de référence **26** à une valeur particulière dépendante des valeurs $I_{ref}$ et $V_{ref}$, comme cela va être expliqué ci-dessous.

On notera qu'il est équivalent pour un bolomètre de parler de sa température ou de sa résistance, ces deux grandeurs étant en effet reliées de manière bi-univoque.

A cet effet, la valeur du signal Select est réglée pour faire basculer les premier et second interrupteurs de lecture **20** et **30** dans leur état ouvert. Parallèlement, la valeur du signal Calib est réglée pour faire basculer le premier interrupteur de calibration **44** dans son état fermé et pour faire basculer le second interrupteur de calibration **46** dans son état ouvert.

Le bolomètre de référence **26** est ainsi polarisé par l'injection dans celui-ci du courant $I_{ref}$ et subit donc un échauffement par effet joule.

Dans le cas d'un matériau classiquement utilisé pour fabriquer un bolomètre, comme par exemple du silicium amorphe ou un oxyde de vanadium, la résistance $R_b$ du bolomètre évolue selon une loi d'Arrhenius selon la relation :

$$R_b = R_{ABS} \times \exp{(Ea/KT)} \qquad (1)$$

où :

- *Ea* est une énergie d'activation de la conductivité électrique du matériau bolométrique ;
- $R_{ABS}$ est la valeur de la résistance du bolomètre de référence lorsque la température de celui-ci tend vers l'infini ;
- *K* la constante de Boltzmann ; et
- T est la température absolue à laquelle est portée la membrane du bolomètre.

Le coefficient de variation relative en température « TCR » de la résistance $R_b$ qui découle de la relation (1) est exprimé par :

$$TCR = -Ea/(K\,T^2)$$

Cette grandeur est donc négative, la résistance $R_b$ diminue lorsque la température augmente.

Toujours en **52**, le niveau de la commande « Reset » est par ailleurs réglé pour faire basculer l'interrupteur de remise à zéro **18** dans son état fermé, déclenchant de ce fait la décharge du condensateur **16**, qui sera maintenu dans cet état jusqu'à l'étape **58** décrite ci-après

Lors d'une étape suivante **54**, un test est mis en oeuvre pour déterminer si la résistance $R_b$ du bolomètre de référence **26** est sensiblement égale à une résistance prédéterminée $R_{ref}$. Si le résultat de ce test est négatif, le préchauffage du bolomètre de référence **26** se poursuit. Sinon, l'étape de test **54** se termine par l'arrêt du préchauffage du bolomètre de référence **26** par la déconnexion de la source de courant **42** du bolomètre de référence **26**.

Plus particulièrement, l'étape **54** est mise en oeuvre par le comparateur **45**.

Selon la loi d'Ohm, la tension $V_b$ aux bornes du bolomètre de référence **26** est modélisable selon la relation :

$$V_b = V_{DDA} - V_C = R_b \times I_{ref} \qquad (2)$$

Le comparateur **45** bascule alors le troisième interrupteur **48** dans son état ouvert, déconnectant ainsi la source de courant **42** du bolomètre de référence **26**, lorsque la tension $V_{ref}$ est sensiblement égale à $V_c = VDDA - V_b$, c'est-à-dire lorsque $R_b$ vérifie la relation :

$$R_b = R_{ref} = \frac{VDDA - V_{ref}}{I_{ref}} \qquad (3)$$

Le préchauffage du bolomètre de référence **26** est ainsi terminé.

On notera que la résistance $R_{ref}$ que présente le bolomètre de référence en fin de préchauffage est indépendante de la quantité de rayonnement infrarouge reçu par le bolomètre de référence. Le bolomètre de référence **26** est ainsi insensibilisé.

On peut en effet montrer que l'échauffement $\theta$ subi par le bolomètre de référence **26** au moment de la déconnexion de la source de courant **42** par le comparateur **45** s'approxime au premier ordre selon la relation :

$$\theta = \frac{1}{TCR} \times \ln\left(\frac{VDDA - V_{ref}}{R_0 \times I_{ref}}\right) \qquad (4)$$

Comme on peut le constater, cet échauffement ne dépend pas du rayonnement infrarouge, mais uniquement de paramètres internes au bolomètre et ainsi que de paramètres du circuit de commande **40**, à savoir le courant $I_{ref}$ et la tension $V_{ref}$.

Lors d'une étape suivante **58**, une lecture du bolomètre d'imagerie est déclenchée une fois le bolomètre de référence **26** préchauffé et le condensateur **16** déchargé.

Dans cette étape **58**, la valeur du signal « Calib » est réglée pour faire basculer le premier interrupteur de calibration **44** dans son état ouvert et pour faire basculer le deuxième interrupteur de calibration **46** dans son état fermé.

Parallèlement, le niveau de la commande « Select » est réglé pour faire basculer les premier et second interrupteurs de lecture **20, 30** dans leur état fermé.

Parallèlement, le niveau de la commande « Reset » est ajusté pour ouvrir l'interrupteur **18** afin d'initier l'intégration du courant sur l'entrée (-) de l'intégrateur **10**.

Le courant $i_2$ traversant le bolomètre de référence **26** est alors reproduit au point B. Il est donc retranché, en entrée de l'intégrateur **10**, au courant $i_1$ traversant le bolomètre d'imagerie **12**.

L'étape de lecture du bolomètre d'imagerie se termine alors en **60**, lorsque la durée d'intégration $\Delta T_{int}$ s'est écoulée depuis la fermeture des premier et second interrupteurs de lecture **20, 30**.

Les valeurs du courant $I_{ref}$ et de la tension $V_{ref}$ sont sélectionnées lors de l'étape **50** de manière à ce que :

- la valeur de $V_{ref}$ soit inférieure à la tension $V_C$ de la borne C lors du déclenchement du préchauffage du bolomètre de référence. Ainsi, la condition de commutation du comparateur **45** n'est pas d'emblée satisfaite. Dans le cas contraire, le préchauffage du bolomètre de référence **26** serait inhibé et le bolomètre de référence serait ainsi sensible au rayonnement ;

- à la fin de l'étape **54**, la résistance des bolomètres de référence **26** soit inférieure à celle du moins résistif des bolomètres de référence **26** de la colonne de compensation **38**, lorsque ce dernier voit un élément de scène présentant une température voisine de la limite haute d'une dynamique de scène prédéterminée. Alternativement et avantageusement, comme les bolomètres de référence **26** sont typiquement équivalents aux bolomètres d'imagerie **12**, cette valeur peut être estimée à partir de la lecture de la trame précédente, ou plus largement, d'un nombre prédéterminé de trames antérieures. En effet, avant l'étape **54**, les bolomètres de référence **26** sont sensibles à la scène. Par conséquent, si $I_{ref}$ et $V_{ref}$ sont mal choisis, le comparateur **45** peut basculer instantanément et arrêter immédiatement la chauffe des bolomètres de référence **26**. En d'autres termes, il convient de choisir la température $\theta$ selon la relation (4) supérieure à la température maximale que peut induire la scène, c'est-à-dire imposer une résistance inférieure à celle que peut induire la scène en son point le plus chaud. Sans cette condition, l'insensibilisation au flux radiatif risque d'être inopérante sur une ou plusieurs lignes si la zone la plus chaude de l'image vient à balayer la ou les colonne(s) de pixels de référence ; et

- la durée d'échauffement nécessaire pour que la résistance du bolomètre de référence atteigne la valeur $R_{ref}$ soit inférieure à une durée fixe estimée acceptable compte tenu de la fréquence de trame. En effet, la décharge du condensateur **16** est quasi immédiate, comparée à la durée de chauffage des bolomètres de référence. Ainsi, le cadencement des signaux Reset et Select peut être conservé.

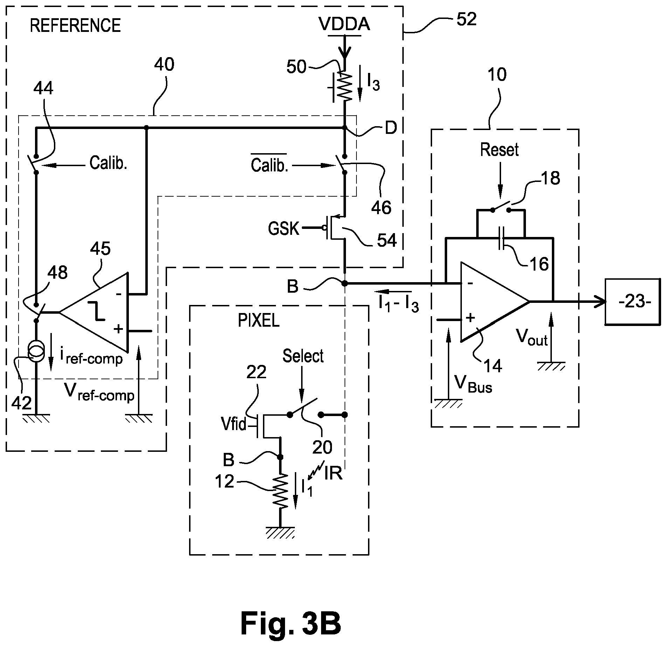

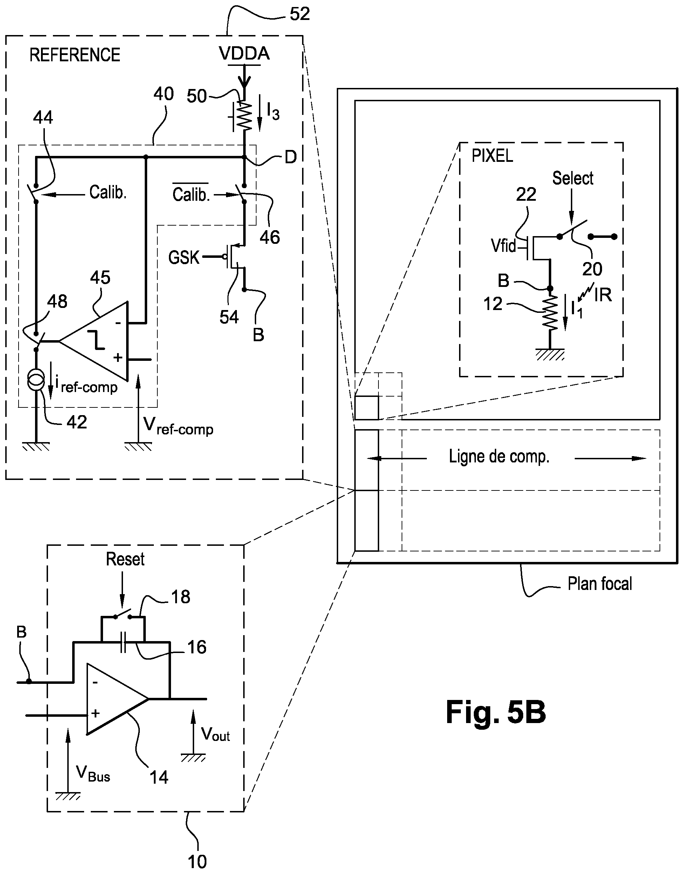

Il va maintenant être expliqué en relation avec les figures 3B et 5B, un second agencement préféré d'un bolomètre d'imagerie, d'un circuit de lecture de celui-ci et d'un bolomètre de réjection de mode commun selon l'invention, de type dit « de compensation ».

Comme illustré à la figure 3B, une structure de réjection de mode commun selon une seconde forme de l'invention comprend une ligne de compensation **52** dans laquelle il est prévu un circuit **40** de commande de la résistance du bolomètre de compensation **50**, identique et assurant la même fonction que celui précédemment décrit. Chaque bolomètre **50** peut comporter un ou plusieurs éléments bolométriques thermalisés au substrat de telle manière à présenter une résistance thermique faible devant celle des bolomètres d'imagerie **12**, mais cependant non négligeable, c'est à dire typiquement réalisée à l'aide de procédés simplifiés, et en particulier sans formation d'écran opaque au rayonnement.

Le circuit **40**, injecte d'une part dans le bolomètre de compensation **50** un courant d'intensité prédéterminée $I_{ref\text{-}comp}$ lorsque le premier interrupteur de calibration **44** est dans son état fermé, et le second interrupteur **46**, agencé entre une borne D du bolomètre **50** et la source du transistor MOS **54**, est simultanément dans son état ouvert ; d'autre part le circuit **40** compare au moyen du comparateur **45** une tension $V_D$ de la borne D du bolomètre de compensation **50** à une tension de référence prédéterminée $V_{ref\text{-}comp}$ ; et enfin le comparateur **45** maintient le troisième interrupteur **48** dans son état fermé lorsque la tension $V_{ref\text{-}comp}$ est supérieure à la tension $V_D$ à la borne D, et bascule le troisième interrupteur **48** dans son état ouvert lorsque la tension $V_{ref\text{-}comp}$ est sensiblement égale à la tension $V_D$.

La figure 5B illustre un détecteur bolométrique comportant une matrice d'imagerie, lue par un circuit de lecture à réjection de courant de mode commun à partir de structures de compensation comportant les éléments venant d'être décrits.

Le procédé de lecture du bolomètre sensible **12** mis en oeuvre par le circuit de commande **40** peut être décrit exactement de la même manière que précédemment développé, à travers une séquence d'étapes **50** à **54** identiques, en considérant respectivement « compensation » pour « référence », $V_{ref\text{-}comp}$ pour $V_{ref}$, $I_{ref\text{-}comp}$ pour $I_{ref}$, « bolomètre **50** » pour « bolomètre **26** », « borne D » pour « borne C », $V_D$ pour $V_C$, VSK pour VDDA, $R_{comp}$ pour $R_b$, $R_{comp}$ étant la résistance du bolomètre de compensation **50**.

A l'issue de l'étape **54**, la résistance du bolomètre de compensation **50** est portée à la valeur prédéterminée $R_{comp\text{-}ref}$ égale à $V_{ref\text{-}comp}$ / $I_{ref.\text{-}comp}$

Les étapes **58** et **60** sont identiques à ce qui a précédemment été décrit, à ceci près que seul l'interrupteur **20** est concerné pour la sélection du bolomètre à lire.

Avant l'étape **54**, les bolomètres de référence **26** sont faiblement, mais mesurablement sensibles à la scène. Par conséquent, si $I_{ref\text{-}comp}$ et $V_{ref\text{-}comp}$ sont mal choisis, le comparateur **45** peut basculer instantanément et arrêter immédiatement la chauffe des bolomètres de compensation **50**. En d'autres termes, il convient de choisir la température θ selon la relation (4) supérieure à la température maximale que peut induire la scène sur les bolomètres de compensation, c'est-à-dire imposer une résistance inférieure à celle que peut induire la scène en son point le plus chaud. Sans cette condition, l'insensibilisation risque d'être inopérante sur une ou plusieurs colonnes, si la zone la plus chaude de l'image vient à balayer la ou les lignes(s) de bolomètres de compensation.

En conséquence, les valeurs du courant $I_{ref\text{-}comp}$ et de la tension $V_{ref\text{-}comp}$ sont sélectionnées lors de l'étape **50** de manière à ce que :

- la valeur de $V_{ref\text{-}comp}$ soit inférieure à la tension $V_D$ de la borne D lors du déclenchement du préchauffage du bolomètre de compensation. Ainsi, la condition de commutation du comparateur **45** n'est pas d'emblée satisfaite. Dans le cas contraire, le préchauffage du bolomètre de compensation **50** serait inhibé et le bolomètre de compensation ne serait pas insensibilisé au rayonnement ;

- à la fin de l'étape **54**, la résistance $R_{comp\text{-}ref}$ des bolomètres de compensation **50** soit inférieure à celle du moins résistif des bolomètres de compensation, lorsque ce dernier voit un élément de scène présentant une température voisine de la limite haute d'une dynamique de scène prédéterminée.

- Alternativement, les valeurs $I_{ref\text{-}comp}$ et $V_{ref\text{-}comp}$ sont sélectionnées de telle manière que la résistance $R_{comp\text{-}ref}$ des bolomètres de compensation **50** soit inférieure à celle du moins résistif des bolomètres de compensation à l'issue de la trame précédente. Avantageusement, cette valeur est extraite de la lecture de la trame précédente, à la fin de laquelle on aura procédé à la lecture de résistance de la ligne de compensation. Plus largement, on peut exploiter le résultat des lectures de la ligne de compensation en relation avec un nombre prédéterminé de trames antérieures ; et

- la durée d'échauffement nécessaire pour que la résistance du bolomètre de compensation atteigne la valeur $R_{comp\text{-}ref}$ soit inférieure à une durée fixe estimée acceptable compte tenu de la fréquence de lecture ligne. En effet, la décharge du condensateur **16** est quasi immédiate, comparée à la durée de chauffage des bolomètres de compensation. Ainsi, le cadencement des signaux Reset et Select peut être conservé.

Grâce à l'invention, on obtient lors de la lecture du bolomètre d'imagerie **12**, et cela sans recourir à un dispositif physique de protection contre les rayonnements issu de la scène :

- une insensibilisation du bolomètre de réjection de mode commun vis-à-vis du rayonnement infrarouge issu de la scène. En effet, la durée de lecture est de l'ordre d'une cinquantaine à une centaine de microsecondes, alors que la constante de temps thermique d'un bolomètre actif ou de référence est de l'ordre de quelques millisecondes. On montre ainsi, que dans le pire des cas, la variation de température du bolomètre de référence due au rayonnement issu de la scène pendant un cycle de lecture provoque une variation typiquement inférieure à 1% du courant en entrée de l'intégrateur. Dans le cas de la mise en oeuvre d'un bolomètre partiellement thermalisé de compensation, la constante de temps thermique peut être de l'ordre de grandeur du temps d'intégration, et l'insensibilisation est de ce fait moins efficace en termes relatifs, cependant la sensibilité de ces bolomètres au flux thermique est déjà faible par construction, et de fait le résultat de l'invention est satisfaisant en ce que la variation du courant en entrée de l'intégrateur devient négligeable ;

■ un coût de fabrication moindre puisque le circuit de commande de la résistance du bolomètre de réjection de mode commun est constitué directement dans le circuit de lecture, entraînant l'économie de fabrication de l'écran d'insensibilisation aux rayonnements, nécessaire ou au moins utile aux bolomètres de réjection de mode commun de l'état de la technique ; et

■ une atténuation substantielle des effets de la dispersion naturelle des résistances des bolomètres de réjection de mode commun, du fait que la résistance de ces éléments est imposée à une valeur commune pour toute la colonne de bolomètres de référence, ou pour toute la ligne de bolomètres de compensation.

Il a été décrit un mode de réalisation particulier de l'invention.

En variante, la source de courant est pilotable. Par exemple, un profil de courant variable pendant la durée de préchauffage peut être préalablement déterminé de manière à encore optimiser cette durée.

En variante encore, la sélection des valeurs $V_{ref}$ et $I_{ref}$, ou $I_{ref-comp}$ et $V_{ref-comp}$ est sélectionnée de telle manière à imposer à la fin de l'étape de mise à température uniforme des bolomètres de réjection de mode commun préalable à la lecture, une résistance inférieure d'une quantité absolue ou relative prédéterminée par rapport à la valeur moyenne d'équilibre thermique des résistances $R_b$ ou $R_{comp}$ lorsque le circuit de commande de résistance des bolomètres de réjection de mode commun n'est pas activé.

Le propos suivant détaille ce qu'entend le terme « prédéterminé » selon le cas de mise en oeuvre de structures de référence ou de compensation.

En effet, l'échauffement d'équilibre, ou ce qui revient au même, la résistance à l'équilibre thermique d'un bolomètre de référence ou de compensation sous l'effet du rayonnement maximal que le détecteur est destiné à détecter, c'est-à-dire lorsqu'il voit une scène dont la température est voisine de la limite haute de la dynamique de scène prévue, est facilement estimable à partir de ses caractéristiques de construction, notamment sa résistance thermique, l'aire efficace de sa membrane sensible et son coefficient d'absorption intégré dans la bande spectrale auquel il est sensible. Cette résistance est par ailleurs dérivable directement de la calibration d'un détecteur représentatif disposé devant un corps noir porté à ladite température.

Il suffit donc d'imposer la valeur de résistance $R_{ref}$ ou $R_{comp-ref}$ obtenue dans les conditions précédemment indiquées, au moyen de l'invention et de la sélection des valeurs appropriées de $V_{ref}$ et $I_{ref}$ (ou plus simplement une seule de ces deux quantités, si l'autre est correctement dimensionnée *a priori*) liées entre elles par la relation $V_{ref} / I_{ref} = R_{ref}$, ou $V_{ref-comp} / I_{ref-comp} = R_{comp-ref}$.

Optionnellement, il peut être utile de compléter la diminution de résistance définie par l'insensibilisation à la dynamique de scène prévue selon les indications précédentes, par une diminution supplémentaire destinée à supprimer l'effet des dispersions naturelles des résistances de réjection de mode commun.

Pour donner un ordre de grandeur utile et clarifier ce propos, pour obtenir l'insensibilisation des structures de réjection de mode commun à une scène portée à 100°C au dessus de la température du plan focal, il convient d'échauffer avant intégration les bolomètres de référence de l'ordre de 2°C environ par rapport à leur température d'équilibre lorsque le détecteur voit une scène à température ambiante et en l'absence de thermalisation électrique selon l'invention. Ceci revient à diminuer leur résistance de 4% environ en considérant les matériaux bolométriques habituels du domaine.

Si la dispersion naturelle des résistances de référence est par ailleurs de l'ordre de 1%, ce qui représente un pire cas, il convient de réduire au moyen de l'invention les résistances de référence de 5% environ au total avant la phase d'intégration pour éliminer les effets spatialement dispersifs de cette distribution naturelle des résistances de référence sur la formation du signal, quelle que soit la température de scène jusqu'à 100°C. Au-delà de cette température, l'insensibilisation n'est effective au mieux que sur une partie des lignes du détecteur et la dispersion naturelle de réjection de mode commun réapparait progressivement.

Pour ce qui concerne la sélection des valeurs $I_{ref-comp}$ et $V_{ref-comp}$ à appliquer aux bolomètres de compensation, un écart de résistance sensiblement plus modéré que dans le cas précédent sera efficace pour insensibiliser la réjection de mode commun sur une dynamique de scène identique.

En effet, pour un bolomètre de compensation par exemple 100 fois moins sensible au rayonnement que les bolomètres actifs, un échauffement électrique préalable à la phase d'intégration d'environ 20mK est adéquat.

Contrairement au cas précédemment détaillé, c'est davantage la dispersion naturelle des résistances $R_{comp}$, indépendamment du flux thermique, qui définit la diminution de résistance à imposer avant intégration, pour assurer que toutes les colonnes seront insensibilisées. En effet si on retient comme précédemment une dispersion spatiale de l'ordre de 1% sur $R_{comp}$, l'échauffement préalable doit conduire à au moins 1% de diminution de résistance, c'est-à-dire s'élever à environ 1°C.

Un tel échauffement est réalisable pour des structures dites thermalisées de la technique courante, en l'espace de quelques microsecondes, compatible avec le chronogramme habituel de fonctionnement du détecteur, à l'aide de tensions $V_{ref-comp}$ et courants $I_{ref-comp}$ facilement réalisables en circuiterie standard du domaine.

C'est cet écart relatif ou absolu, globalement considéré, de manière peut-être moins raffinée que suggéré précédemment à l'aide d'estimations déduites du signal d'image, ou spécifique aux bolomètres de compensations, mais avantageusement appliqué de manière simple car indépendante de la scène courante, qu'on a appelé « écart prédéterminé ».

Les commentaires produits précédemment en support des variantes proposées s'appliquent nominalement et exactement à un détecteur maintenu à température de plan focal fixe, par exemple régulée par un module à effet Peltier (TEC) ou à l'aide d'un chauffage régulé du circuit de lecture.

Si la température du plan focal est appelée à varier, comme il est maintenant de plus en plus répandu pour des raisons économiques, il convient typiquement de prévoir une évolution concomitante et pertinente des conditions de thermalisation des bolomètres de réjection de mode commun, de manière à obtenir un résultat satisfaisant d'insensibilisation au flux thermique de scène, à toute température dans la gamme opérationnelle du détecteur.

A cette fin, ou peut prévoir par exemple une circuiterie électronique de type analogique, comportant typiquement au moins un élément destiné à asservir la tension $V_{ref}$ (resp. $V_{ref-comp}$) ou le courant $I_{ref}$ (resp. $I_{ref-comp}$) de manière adéquate en fonction de la température du plan focal (du substrat portant le circuit de lecture). Un élément typique est par exemple un amplificateur opérationnel contre-réactionné par un bolomètre thermalisé par construction (de type compensation, et disposé en dehors de la surface en relation avec la scène), lequel bolomètre définit le gain de l'amplificateur en proportion de sa résistance, c'est-à-dire selon une loi représentative de la température du substrat du circuit de lecture.

Une autre disposition à cette fin d'asservissement fonctionnel en température de plan focal est de fournir à l'unité de traitement **28** une mesure de température du plan focal, par exemple au moyen d'une sonde formée en surface du substrat, laquelle unité de traitement établit numériquement la ou les corrections à appliquer aux sources de tension ou/et courant contrôlant les bolomètres de réjection de mode commun.

De cette manière, les considérations établies dans l'ensemble du document, implicitement pour une température de plan focal particulière, sont applicables à toute autre température dans une gamme étendue au voisinage de la température ambiante.

De même, en variante le bolomètre d'imagerie et le bolomètre de réjection de mode commun sont agencés en pont de Wheastone tel que décrit dans le document US 2003/0146383.

La présente invention trouve application dans le domaine des capteurs d'image à détection bolométrique, quelle que soit la bande de fréquences de détection ou du type de matériau bolométrique utilisé pour fabriquer les bolomètres d'imagerie et de référence, comme par exemple du silicium amorphe (a-Si), de l'oxyde de vanadium (Vox), un métal (Ti).

Par sa capacité d'adaptation à différentes températures de fonctionnement d'un capteur d'image à détection bolométrique, l'invention s'applique aussi bien aux capteurs régulés thermiquement qu'aux capteurs opérant à une température variable du plan focal (communément désigné par l'expression « TEC-LESS »), et cela qu'un obturateur ait été ou non prévu en association avec l'optique.

## Revendications

1. Dispositif pour la détection d'un rayonnement électromagnétique comportant un bolomètre résistif d'imagerie (12) sensible au rayonnement électromagnétique à détecter, un circuit (10) de formation de signal connecté électriquement au bolomètre (12), et un bolomètre résistif de réjection de mode commun (26 ; 50)) comprenant une première et une seconde bornes, la première borne étant connectée à une tension constante (VDDA) et la seconde borne (C ; D) étant associée électriquement au bolomètre d'imagerie (12), de manière à ce que le courant traversant le bolomètre de réjection de mode commun (26 ; 50) soit retranché du courant traversant le bolomètre d'imagerie (12), *caractérisé* **en ce qu'**il comporte des moyens (40) de commande de la résistance du bolomètre de réjection de mode commun par injection d'un courant de référence prédéterminé ($I_{ref}$ ; $I_{ref\_comp}$) dans celui-ci et **en ce que** les moyens (40) de commande comprennent :

 - une source de courant (42) apte à injecter le courant de référence prédéterminé ($I_{ref}$ ; $I_{ref\_comp}$) dans le bolomètre de réjection de mode commun ;
 - des moyens (48) pour connecter la source de courant (42) au bolomètre de réjection de mode commun (26 ; 50), de sorte que le courant de référence prédéterminé ($I_{ref}$ ; $I_{ref\_comp}$) parcoure le bolomètre de réjection de mode commun et induit une variation de la tension de la seconde borne (C ; D) de ce dernier ;
 - des moyens (45, 58) pour déconnecter la source de courant (42) du bolomètre de réjection du mode commun (20 ; 50), lesdits moyens comprenant :

  ◦ un comparateur (45) ayant une première borne connectée à la seconde borne (C ;

D) du bolomètre de réjection de mode commun et une seconde borne connectée à une tension de référence prédéterminée ($V_{ref}$ ; $V_{ref\_comp}$) ; et

○ un interrupteur (48), piloté par un signal de sortie du comparateur (45), pour déconnecter la source de courant (42) du bolomètre de réjection de mode commun (26 ; 50) lorsque la tension de la seconde borne (C ;D) de ce dernier est égale à la tension de référence prédéterminée ($V_{ref}$ ; $V_{ref\_comp}$), de sorte que la résistance électrique du bolomètre de réjection de mode commun (26 ; 50) est réglée sur le rapport entre la tension à ses bornes à l'instant de déconnection et le courant de référence prédéterminé ($V_{ref}$ ; $V_{ref\_comp}$).

2. Dispositif pour la détection d'un rayonnement infrarouge selon la revendication 3, *caractérisé en ce qu'*il comporte des moyens de réglage de la tension de référence ($V_{ref}$ ; $V_{ref\_comp}$) aptes à régler celle-ci sur une valeur supérieure à la tension à la seconde borne (C ; D) du bolomètre de réjection de mode commun lors de la connexion de la source de courant (42) par les moyens de connexion (48).

3. Dispositif pour la détection d'un rayonnement infrarouge selon la revendication 1 ou 2, *caractérisé en ce que* le bolomètre de réjection de mode commun est un bolomètre de référence, et **en ce qu'**il comprend un miroir de courant (34) apte à être connecté électriquement sur une première branche à une borne (C) du bolomètre d'imagerie, et sur une seconde branche à une borne du bolomètre de référence (26).

4. Dispositif selon l'une quelconque des revendications 1 à 2, *caractérisé en ce que* le bolomètre de réjection de mode commun est un bolomètre de compensation (50).

5. Dispositif selon l'une quelconque des revendications précédentes, *caractérisé en ce que* les moyens de commande (40) sont aptes à fixer la résistance du bolomètre de réjection de mode commun (26 ; 50) sur une résistance de référence dépendante de la température du substrat au-dessus duquel est formé le bolomètre d'imagerie (12).

6. Dispositif pour la détection d'un rayonnement infrarouge selon l'une quelconque des revendications 1 à 5, *caractérisé en ce que* le bolomètre d'imagerie et le bolomètre de réjection de mode commun sont agencés dans un pont de Wheatstone.

7. Système de détection d'un rayonnement électromagnétique comportant une matrice d'au moins une ligne de dispositifs comportant chacun :

■ un bolomètre résistif d'imagerie (12) sensible au rayonnement et un bolomètre résistif de réjection de mode commun (26 ; 50) associé électriquement au bolomètre d'imagerie (12) de manière à ce qu'un courant traversant le bolomètre de réjection de mode commun (26 ; 50) soit retranché d'un courant traversant le bolomètre d'imagerie (12),

■ et un circuit de formation de signal (10) apte à être connecté électriquement au bolomètre d'imagerie (12),

*caractérisé en ce que* les dispositifs sont chacun conformes à l'une quelconque des revendications précédentes.

8. Système de détection d'un rayonnement infrarouge selon la revendication 9, *caractérisé en ce que* les moyens (40) de commande de la résistance du bolomètre de réjection de mode commun sont aptes à régler sa résistance à une valeur indépendante de la scène.

9. Système de détection d'un rayonnement infrarouge selon l'une des revendications 7 et 8, *caractérisé en ce que* le circuit de formation de signal (10) est apte à être initialisé avant une lecture du bolomètre d'imagerie (12), et **en ce que** les moyens (40) de commande de la résistance du bolomètre de réjection de mode commun sont aptes à régler celle-ci pendant l'initialisation du circuit d'intégration.

10. Procédé de lecture d'une variation de résistance d'un bolomètre résistif d'imagerie (12) d'une matrice de bolomètres constitutive d'un système de détection du rayonnement électromagnétique comportant un bolomètre de rejection de mode commun (26) associé à chaque ligne ou chaque colonne de la matrice de bolomètres d'imagerie (12), et formant avec chacun des bolomètres d'imagerie de ladite ligne ou colonne associée un dispositif selon la revendication 1, consistant :

■ à faire circuler dans un bolomètre de réjection de mode commun (26), associé à la ligne ou à la colonne du bolomètre d'imagerie (12), un courant de mode commun de la matrice,
■ à générer une différence de courant entre les courants circulant dans les bolomètres d'imagerie (12) et les bolomètres de réjection de mode commun,
■ à former le signal relatif au bolomètre d'imagerie (12) en fonction de la différence de courant,

*caractérisé en ce qu'*il consiste en outre, préalablement à l'étape de circulation du courant de mode commun dans le bolomètre de réjection de mode commun (26), à régler la résistance du bolomètre de réjection de mode commun (26) à une valeur inférieure à celle de tous les bolomètres de rejection de mode commun (26) lorsqu'ils sont exposés à une scène de température voisine de la limite haute d'une dynamique de scène prédéterminée.

**Patentansprüche**

1. Vorrichtung zur Erkennung elektromagnetischer Strahlung, umfassend ein Widerstands- Bildgebungsbolometer (12), das empfindlich gegenüber der zu erkennenden elektromagnetischen Strahlung ist, einen Signalaufbereitungs-Schaltkreis (10), der elektrisch mit dem Bolometer (12) verbunden ist, und ein Widerstands- Gleichaktunterdrückungsbolometer (26; 50), umfassend eine erste und eine zweite Klemme, wobei die erste Klemme mit einer konstanten Spannung (VDDA) verbunden ist und die zweite Klemme (C, D) elektrisch mit dem Bildgebungsbolometer (12) verbunden ist, so dass der Strom, der durch den Gleichaktunterdrückungsbolometer (26 ; 50) fließt, vom Strom der durch das Bildgebungsbolometer (12) fließt, subtrahiert wird, **dadurch gekennzeichnet dass** sie Mittel (40) zur Steuerung des Widerstands des Gleichaktunterdrückungsbolometer enthält, durch Einspeisen eines vorher bestimmten Referenzstroms ($I_{ref}$; $I_{ref\_comp}$) in diesen und dass die Steuerungsmittel (40) umfassen:

- eine Stromquelle (42), die in der Lage ist, den vorher bestimmten Referenzstrom ($I_{ref}$; $I_{ref\_comp}$) in das Widerstands- Gleichaktunterdrückungsbolometer einzuspeisen;
- Vorrichtungen (48) zur Verbindung der Stromquelle (42) mit dem Widerstands-Unterdrückungsbolometer allgemeiner Bauart (26 ; 50), so dass der vorher bestimmte Referenzstrom ($I_{ref}$; $I_{ref\_comp}$) durch das Widerstands-Gleichaktunterdrückungsbolometer fließt und eine Spannungsänderung der zweiten Klemme (C ; D) dieses Bolometers verursacht;
- Vorrichtungen (45, 58), um die Stromquelle (42) vom Widerstands-Gleichaktunterdrückungsbolometer (26; 50) abzuklemmen, zu diesen Vorrichtungen gehören:

  ◦ ein Vergleicher (45) mit einer ersten Klemme, die verbunden mit der zweiten Klemme (C; D) des Gleichaktunterdrückungsbolometer ist und eine zweite Klemme, die mit einer vorher bestimmten Referenzspannung ($V_{ref}$ ; $V_{ref\_comp}$) verbunden ist; und
  ◦ einen Schalter (48), gesteuert durch eine Ausgangssignal des Vergleichers (45), um die Stromquelle (42) vom Gleichaktunterdrückungsbolometer (26 ; 50) zu trennen, wenn die Spannung an dessen zweiter Klemme (C; D) gleich der vorher bestimmten Referenzspannung ($V_{ref}$ ; $V_{ref\_comp}$) ist, so dass der elektrische Widerstand des Gleichaktunterdrückungsbolometers (26 ; 50), über die Beziehung zwischen der Spannung an seinen Klemmen im Augenblick des Trennens und der vorher bestimmten Referenzspannung ($V_{ref}$; $V_{ref\_comp}$) geregelt wird.

2. Vorrichtung zur Erkennung elektromagnetischer Strahlung, gemäß Anspruch 3, **dadurch gekennzeichnet, dass** die Steuervorrichtungen Referenzspannung ($V_{ref}$ ; $V_{ref\_comp}$) umfasst, die in der Lage sind, diese entsprechend dem Wert über der Spannung an der zweiten Klemme (C ; D) des Gleichaktunterdrückungsbolometers (26 ; 50) bei der Verbindung der Stromquelle (42) über die Verbindungsvorrichtungen zu regeln (48).

3. Vorrichtung zur Erkennung elektromagnetischer Strahlung, gemäß Anspruch 1 oder 2, **dadurch gekennzeichnet, dass** der Gleichaktunterdrückungsbolometer ein Referenzbolometer ist und dass es einen Stromspiegel (34) umfasst, der elektrisch über einen ersten Zweig mit einer Klemme (C) des Bildgebungsbolometers und über einen zweiten Zweig mit einer Klemme des Referenzbolometers (26) verbunden werden kann.

4. Vorrichtung gemäß einem der Ansprüche 1 bis 2, **dadurch gekennzeichnet, dass** der Gleichaktunterdrückungsbolometer ein Ausgleichsbolometer (50) ist.

5. Vorrichtung gemäß einem der vorstehenden Ansprüche, **dadurch gekennzeichnet, dass** die Steuervorrichtungen (40) in der Lage sind, den Widerstand des Gleichaktunterdrückungsbolometers (26; 50) auf einen Referenzwiderstand festzulegen, der von der Temperatur des Substrats abhängt über dem, das Bildgebungsbolometer (12) gebildet wird.

6. Vorrichtung zur Erkennung elektromagnetischer Strahlung, gemäß einem der Ansprüche 1 bis 5, **dadurch gekennzeichnet, dass** das Bildgebungsbolometer und das Gleichaktunterdrückungsbolometers in einer Wheatstone- Brücke angeordnet sind.

7. System zur Erkennung elektromagnetischer Strahlung, umfassend eine Matrix mit mindestens einer Reihe von Vorrichtungen, von denen jede umfasst:

■ einen strahlungsempfindlichen Widerstands- Bildgebungsbolometer (12) und einen Gleichaktunterdrückungsbolometer (26; 50), der elektrisch mit dem Bildgebungsbolometer (12) verbunden ist, so dass ein Strom, der durch den Gleichaktunterdrückungsbolometer (26; 50) fließt, von einem Strom, der durch den Bildgebungsbolometer (12) fließt, subtrahiert wird,

■ und einem Signalaufbereitungs- Schaltkreis (10), der elektrisch mit dem Bildgebungsbolometer (12) verbunden werden kann,

**dadurch gekennzeichnet, dass** die Vorrichtungen jeweils irgendeinem der vorstehenden Ansprüche entsprechen.

8. System zur Erkennung elektromagnetischer Strahlung gemäß Anspruch 9, **dadurch gekennzeichnet, dass** die Steuervorrichtungen (40) des Widerstandes des Gleichaktunterdrückungsbolometers in der Lage sind, seinen Widerstand auf einen von der Szene unabhängigen Wert zu regeln.

9. System zur Erkennung elektromagnetischer Strahlung gemäß einem der Ansprüche 7 und 8, **dadurch gekennzeichnet, dass** der Signalaufbereitungs-Schaltkreis (10), vor einem Auslesen des Bildgebungsbolometers (12) initialisiert werden kann und dass die Steuervorrichtungen (40) des Widerstandes des Gleichaktunterdrückungsbolometers in der Lage sind, diesen während der Initialisierung des Aufbereitungsschaltkreises zu regeln.

10. Verfahren zur Auslesen der Änderung des Widerstandes eines Widerstands-Bildgebungsbolometers (12) einer Bolometer- Matrix, die ein System zur Erkennung elektromagnetischer Strahlung bildet, umfassend einen Gleichaktunterdrückungsbolometer (26), der mit jeder Zeile oder jeder Spalte der Bildgebungsbolometer (12) - Matrix verbunden ist und der mit jedem der Bildgebungsbolometer (12) dieser verbundenen Zeile oder Spalte eine Vorrichtung gemäß Anspruch 1 bildet, die daraus besteht:

■ in einem Gleichaktunterdrückungsbolometer (26) verbunden mit der Zeile oder der Spalte des Bildgebungsbolometers (12) einen Strom allgemeiner Art der Matrix fließen zu lassen,
■ eine Stromdifferenz zwischen den in den Bildgebungsbolometern (12) und den Gleichaktunterdrückungsbolometern fließenden Strömen zu erzeugen,
■ das Signal relativ zum Bildgebungsbolometer (12), in Abhängigkeit von der Stromdifferenz zu bilden,

**dadurch gekennzeichnet, dass** es darin besteht, außer dem Schritt des Fließens des Stroms allgemeiner Art im Gleichaktunterdrückungsbolometer (26) den Widerstand des Gleichaktunterdrückungsbolometers (26) auf einen Wert unter dem aller Gleichaktunterdrückungsbolometer (26) zu regeln, wenn diese einer Temperaturszene in Nähe des Höchstwertes einer vorher bestimmten Szenedynamik ausgesetzt sind.

**Claims**

1. A device for detecting an electromagnetic radiation comprising a resistive imaging bolometer (12) sensitive to the electromagnetic radiation to be detected, a signal shaping circuit (10) connected electrically to the bolometer (12), and a resistive common mode rejection bolometer (26, 50) comprising a first terminal and a second terminal, the first terminal being connected to a constant voltage (VDDA) and the second terminal (C ; D) being electrically associated with the imaging bolometer (12) that is associated electrically with the imaging bolometer (12), so that the current flowing through the common mode rejection bolometer (26, 50) is subtracted from the current flowing through the imaging bolometer (12), *characterized* in that it comprises means (40) for controlling the resistance of the common mode rejection bolometer by injecting a predefined reference current ($I_{ref}$; $I_{ref\_comp}$) therein and **in that** the means (40) comprise :

• a current source (42) able to inject the predefined reference current ($I_{ref}$; $I_{ref\_comp}$) in the common mode rejection bolometer ;
• means (48) for connecting the current source (42) to the common mode rejection bolometer (26, 50), so that the predefined reference current ($I_{ref}$; $I_{ref\_comp}$) flows through the common mode rejection bolometer and induces a variation of the voltage of the second terminal (C ; D) of the later ;
• means (45, 58) for disconnecting the current source (42) of the common mode rejection bolometer (26, 50), said means comprising :

■ a comparator (45) having a first terminal connected to the second terminal (C ; D) of the common mode rejection bolometer and a second terminal connected to a predefined reference voltage ($V_{ref}$; $V_{ref\_comp}$) ; and
■ a switch (48) controlled by an output signal of the comparator (45), for disconnecting the current source (42) of the common mode rejection bolometer (26 ; 50) when the voltage of the second terminal (C ; D) of the later is equal to the predefined reference voltage ($V_{ref}$; $V_{ref\_comp}$), so that the electric resistance of the common mode rejection bolometer (26 ; 50) is adjusted on the ratio of the voltage at its terminals at the time of disconnection and the predefined reference current ($I_{ref}$; $I_{ref\_comp}$).

2. The device for detecting an infrared radiation as claimed in claim 1, ***characterized* in that** it comprises means for adjusting the reference voltage ($V_{ref}$; $V_{ref\_comp}$) able to set said voltage at a at a higher value than the voltage at the second terminal (C; D) of the common mode rejection bolometer during the connecting of the current source (42) by the switch means (48).

3. The device for detecting an infrared radiation as claimed in claims 1 or 2, ***characterized* in that** the common mode rejection bolometer is a reference bolometer, and **in that** it comprises a current mirror (34) suitable for being electrically connected on a first branch to a terminal (C) of the imaging bolometer, and on a second branch to a terminal of the reference bolometer (26).

4. The device for detecting an infrared radiation as claimed in any one of claims 1 and 2, ***characterized* in that** the common mode rejection bolometer is a compensation bolometer (50).

5. The device for detecting an infrared radiation as claimed in any one of the preceding claims, ***characterized* in that** the control means (40) are suitable for fixing the resistance of the common mode rejection bolometer (26; 50) to a reference resistance depending on the temperature of the substrate above which the imaging bolometer (12) is formed.

6. The device for detecting an infrared radiation as claimed in any one of claims 1 to 5, ***characterized* in that** the imaging bolometer and the common mode rejection bolometer are arranged in a Wheatstone bridge.

7. A system for detecting an electromagnetic radiation comprising a matrix of at least one line of devices each comprising:

   ▪ a resistive imaging bolometer (12) sensitive to the radiation and a resistive common mode rejection bolometer (26; 50) associated electrically with the imaging bolometer (12) so that a current flowing through the common mode rejection bolometer (26; 50) is subtracted from a current flowing through the imaging bolometer (12),
   ▪ and a signal shaping circuit (10) suitable for being connected electrically to the imaging bolometer (12),

   ***characterized* in that** the devices are each conform to any one of the preceding claims.

8. The system for detecting an infrared radiation as claimed in claim 7, ***characterized* in that** the means (40) for controlling the resistance of the common mode rejection bolometer are suitable for adjusting its resistance to a value independent of the scene.

9. The system for detecting an infrared radiation as claimed in either of claims 7 and 8, ***characterized* in that** the signal shaping circuit (10) is suitable for being initialized before a reading of the imaging bolometer (12), and **in that** the means (40) for controlling the resistance of the common mode rejection bolometer are suitable for adjusting said resistance during the initialization of the integration circuit.

10. A method for reading a variation in resistance of a resistive imaging bolometer (12) of a matrix of bolometers constituting a system for detecting the electromagnetic radiation comprising a common mode rejection bolometer (26) associated with each line or each column of the matrix of imaging bolometers (12), and forming with each imaging bolometer of said associated line or of said associated column a device according to claim 1, consisting in:

   ▪ circulating a common mode current of the matrix in a common mode rejection bolometer (26) associated with the line or the column of the imaging bolometers (12),
   ▪ generating a current difference between the currents flowing in the imaging bolometers (12) and the common mode rejection bolometers,
   ▪ shaping the signal relative to the imaging bolometer (12) according to the current difference,

   ***characterized* in that** it further consists, prior to the step of circulating the common mode current in the common mode rejection bolometer (26), in setting the resistance of the common mode rejection bolometer (26) at a value lower than that of all the common mode rejection bolometers (26) when they are exposed to a scene having a temperature close to the upper limit of a predefined scene dynamic.

**Fig. 1**

**Fig. 2A**

**Fig. 2B**

Fig. 3A

Fig. 4

**Fig. 3B**

**Fig. 5A**

**Fig. 5B**

## RÉFÉRENCES CITÉES DANS LA DESCRIPTION

**Documents brevets cités dans la description**

- EP 1211888 A
- WO 2005073684 A
- WO 9835212 A
- US 20060231760 A
- WO 0184118 A
- US 20030146383 A

**Littérature non-brevet citée dans la description**

- **DE YUTAKA TANAKE et al.** Performance of 320x240 Uncooled Bolometer-type Infrared Focal Plane Arrays. *Proc. SPIE,* vol. 5074
- **DE TISSOT et al.** Uncooled amorphous silicon IRF-PAs with 25 $\mu$m pixel-pitch. *Proc. SPIE,* vol. 6395
- **E MOTTIN et al.** Uncooled amorphous silicon enhancement for 25$\mu$m pixel pitch achievement. *Proc. SPIE, Technology and Application XXVIII,* vol. 4820
- **DE E. MOTTIN et al.** Uncooled amorphous silicon enhancement for 25$\mu$m pixel pitch achievement. *Proc. SPIE Technology and Application XXVIII,* vol. 4820